# EUROPEAN PATENT APPLICATION

(11) **EP 2 809 076 A1**
(43) Date of publication of application: **03.12.2014**
(21) Application number: 14154772.9
(22) Date of filing: 12.02.2014
(51) Int. Cl.: H04N 21/47, H04N 5/445, G06F 3/0483

(54) **Display apparatus, method of controlling display apparatus, and computer-readable recording medium**

(30) Priority: 29.05.2013 KR 20130061181
(71) Applicant: Samsung Electronics Co., Ltd, Gyeonggi-do 443-742 (KR)
(72) Inventor: Bae, Hee-jeong, Gyeonggi-do (KR); Kwon, Yong-hwan, Gyeonggi-do (KR); Seo, Jang-won, Seoul (KR); Choi, Myung-kwan, Gyeonggi-do (KR); Choi, Yoo-jin, Seoul (KR); Hwang, Woo-seok, Seoul (KR)
(74) Representative: Instone, Terry

(57) **Abstract**

A method of controlling a display apparatus is provided. The method of controlling a display apparatus includes generating a display screen which displays a default home screen, from among a plurality of home screens, and a portion of a home screen, from among the plurality of home screens, different from the default home screen, when power to the display apparatus is turned on; and displaying the generated display screen.

## Description

### BACKGROUND

### 1. Field

Apparatuses and methods consistent with exemplary embodiments generally relate to a display apparatus, a method of controlling a display apparatus, and a computer-readable recording medium, and more particularly, to a display apparatus which displays a home screen for user convenience, a method of controlling a display apparatus, and a computer-readable recording medium.

### 2. Description of the Related Art

With the development of technologies regarding display apparatuses and improvements in communication technologies, recently developed display apparatuses (e.g., a smart TV) provide various services.

However, in the related art, information related to various services of the display apparatuses has not been sufficiently provided. Hence, there is a problem that a user of a display apparatus only uses a broadcast service that provides a common service thereof, without recognizing various services of a display apparatus.

In addition, even though the user of the display apparatus may recognize various services of the display apparatus, the user may use a separate button and pass through complicated procedures in order to access to such various services.

### SUMMARY

According to the present invention there is provided an apparatus and method as set forth in the appended claims. Other features of the invention will be apparent from the dependent claims, and the description which follows.

One or more exemplary embodiments provide a display apparatus which generates a display screen which displays a default home screen from among a plurality of home screens with a portion of an area of a home screen being different from the default home screen, a method of controlling a display apparatus and a computer-readable recording medium.

According to an aspect of an exemplary embodiment, there is provided a method of controlling a display apparatus, the method including generating a display screen which displays a default home screen, from among a plurality of home screens, and a portion of a home screen, from among the plurality of home screens, different from the default home screen, when power to the display apparatus is turned on; and displaying the generated display screen.

The default home screen may be a screen corresponding to a service which is performed prior to the display apparatus being turned off.

The service may be at least one of a broadcast service and a play service of an image received from an external apparatus.

The generating may include generating a display screen by disposing the default home screen on a center of the display screen, and disposing a portion a home screen different from the default home screen on a left side and a portion a home screen different from the default home screen on a right side of the display screen.

The method may further include displaying a display screen which displays only the default home screen when a predetermined period of time has elapsed after the power to the display apparatus is turned on.

The method may further include receiving a predetermined user manipulation, and when the predetermined user manipulation is inputted, changing and displaying a display screen which displays only the default home screen to a display screen by displaying the default home screen and a portion of a home screen which is different from the default home screen.

The displaying may include displaying an intro image which sequentially displays the plurality of home screens when the display apparatus is turned on, and displaying a display screen generated after the intro image is displayed.

The method may further include receiving a user manipulation to receive a selection of the different home screen, and generating and displaying a display screen based on the selected different home screen.

The home screen may be at least one of a screen of displaying an image corresponding to a service, a screen displaying a plurality of icons, and a screen displaying a plurality of widgets.

According to an aspect of an exemplary embodiment, there is provided a display apparatus including a display configured to display a screen; and a controller configured to generate a display screen which displays a default home screen, from among a plurality of home screens, and a portion of a home screen, from among a plurality of home screens, which is different from the default home screen, when power of the display apparatus is turned on, and control the display to display the generated display screen.

The default home screen may be a screen which corresponds to a service which is performed prior to the display apparatus being turned off.

The service may be at least one of a broadcast service and a play service of an image received from an external apparatus.

The controller may be configured to generate a display screen by disposing the default home screen on the center of the display screen, and disposing a portion of a home screen different from the default home screen on the left side and a portion of a home screen different from the default home screen on the right side of the display screen.

When a predetermined period of time elapses after the power of the display apparatus is turned on, the controller may control the display to display a display screen which displays only the default home screen.

The apparatus may further include an input unit configured to receive a user manipulation. In addition, when a predetermined user manipulation is inputted from the input unit, the controller may be configured to control the display to display the display screen displaying only the default home screen to change to a display screen which displays the default home screen and a portion of a home screen which is different from the default home screen.

When the display apparatus is turned on, the controller may be configured to control the display in order to sequentially display an intro image which displays the plurality of home screens, and display the generated display screen after the intro image is displayed.

The apparatus may further include an input unit configured to receive a user input manipulation. In addition, when a user manipulation for receiving a selection of the different home screen is inputted through the input unit, the controller may control the display to generate and display a display screen based on the selected different home screen.

The home screen may be at least one of a screen which displays an image which corresponds to a service, a screen which displays a plurality of icons, and a screen which displays a plurality of widgets.

According to an aspect of another exemplary embodiment, there is provided a computer-readable recording medium in which a program code for executing a method of controlling a display apparatus is recorded, the method including generating a display screen which displays a default home screen, from among a plurality of home screens, and a portion of a home screen, from among the plurality of home screens, different from the default home screen, when power to the display apparatus is turned on; and displaying the generated display screen.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram which illustrates a display apparatus, according to an exemplary embodiment;
FIG. 2 is a block diagram which illustrates the display apparatus of FIG. 1 in detail;
FIG. 3 to FIG. 9 are the views which illustrate a display screen, according to an exemplary embodiment; and
FIG. 10 is a flow chart which illustrates a method of controlling a display apparatus, according to an exemplary embodiment.

### DETAILED DESCRIPTION

Certain exemplary embodiments are described in greater detail below with reference to the accompanying drawings.

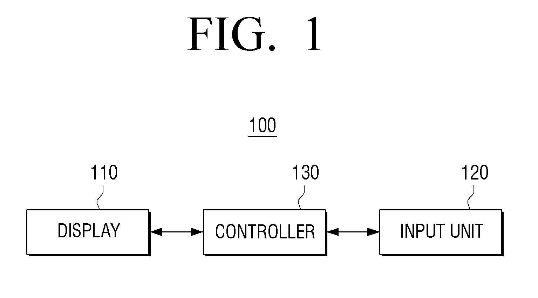

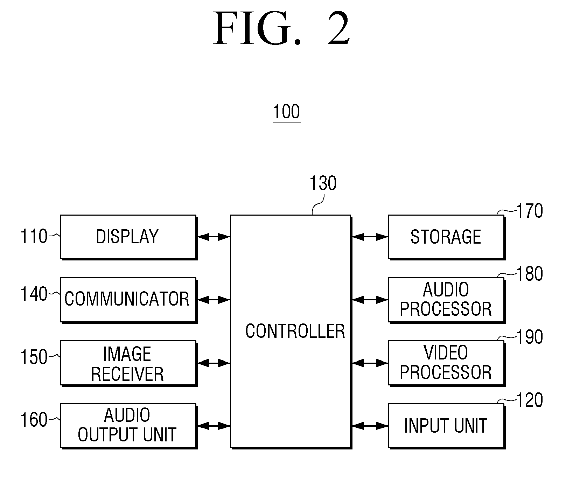

FIG. 1 is a block diagram which illustrates a display apparatus according to an exemplary embodiment. FIG. 2 is a block diagram which illustrates the display apparatus of FIG. 1 in detail. Referring to FIG. 1 and FIG. 2, a display apparatus 100 includes a part or all of a display 110, an input unit 120, a controller 130, a communicator 140, an image receiver 150, an audio output unit 160, a storage 170, an audio processor 180, and a video processor 190. Herein, the display apparatus 100 may be realized a smart TV, but not limited to, the display apparatus 100 may be realized as various display apparatuses such as a desktop PC (Personal Computer), a notebook PC, a projector, a tablet PC, a mobile phone, a PDA (Personal Digital Assistant), a PMP (Portable Multimedia Player), and the like.

The display 110 displays a screen. To be specific, the display 110 may display a display screen generated according to control of the controller 130 which will be described below.

Herein, the display 110 may be implemented as at least one of a liquid crystal display (LCD), a thin film transistor-liquid crystal display (TFT-LCD), an organic light-emitting diode (OLED), a flexible display, a 3-dimensional (3D) display, and a transparent display.

The input unit 120 receives a user manipulation to the display apparatus 100.

Herein, the input unit 120 may be implemented by using at least one of various types of buttons, a touch sensor which receives a touch input to the display 120, a proximity sensor which receives an approaching motion without directly contacting a surface of the display 110, and a microphone which receives a user's voice input. In addition, the input unit 120 may be implemented by combining an input device such as a mouse, a keyboard, and a remote controller, and the like, with a display device such as the display 110. Hence, the input unit 120 may receive various user inputs such as a touch input, a motion input, and a voice input, and the like.

The communicator 140 enables the display apparatus 100 to perform communication with various external apparatuses. At this point, the communicator 140 may include various communication chips such as a Wi-Fi chip, a Bluetooth chip, an NFC (Near Field Communication) chip, and a wireless communication chip, etc. Herein, the Wi-Fi chip, the Bluetooth chip, and the NFC chip may perform communication by using a Wi-Fi method, a Bluetooth method, and an NFC method, respectively. The NFC chip may perform communication in the NFC method of using a band of 13.56 MHz among various RF-ID frequency bands of 135 kHz, 13.56 MHz, 433 MHz, 860-960 MHz and 2.45 GHz, etc. The Wi-Fi chip or the Bluetooth chip may perform communication by transmitting and receiving various connection information, such as an SSID and a session key, and connecting communication using the connection information. The wireless communication chip may perform communication according to various communication standards such as IEEE, Zigbee, 3G (3rd Generation), 3GPP (3rd Generation Partnership Project), and LTE (Long Term Evolution), etc.

The image receiver 150 receives image data through various sources. To be specific, the image receiver 150 may receive broadcast data which corresponds to a broadcast service from an external broadcasting station, and may receive image data which corresponds to an image play service from an external apparatus (e.g., a DVD apparatus).

An audio output unit 160 outputs not only various audio data processed in the audio processor 180 but also various notification sounds or voice messages.

The storage 170 stores various program modules for operating the display apparatus 100. For example, the storage 170 may store software including a base module, a sensing module, a communication module, a presentation module, a web browser module, and/or a service module. At this point, the base module is a basic module which processes and transmits to a high layer module a signal transmitted from each hardware component included in the display apparatus 100. The sensing module is a module which gathers information from various sensors, and analyzes and manages the gathered information, and the sensing module may include a face recognition module, a voice recognition module, a motion recognition module, and an NFC recognition module, and the like. The presentation module is a module for configuring a display screen. The communication module is a module for performing communication with an external apparatus. The web browser module refers to a module which accesses to a web server by performing web browsing. The service module is a module which includes various applications for providing various services.

As described above, the storage 170 may include various program modules, but such various program modules may be partially omitted or modified or added according to a type and characteristic of the display apparatus 100.

The audio processor 180 performs processing of audio data. To be specific, the audio processor 180 may perform various processing to the audio data, such as decoding, amplifying, and noise filtering, and the like. In addition, the audio processor 180 may provide the audio output unit 160 with the processed audio data.

The video processor 190 performs processing of image data received by the image receiver 230. To be specific, the video processor 190 may perform various image processing to the image data, such as decoding, scaling, noise filtering, frame rate conversion, resolution conversion, and the like.

The controller 130 controls overall operations of the display apparatus 100. To be specific, the controller 130 may control a part or all of the display 110, the input unit 120, the communicator 140, the image receiver 150, the audio output unit 160, the storage 170, the audio processor 180, and the video processor 190.

Specially, when the power of the display apparatus 100 is turned on, the controller 130 may generate a plurality of home screens which are providable on the display apparatus 100. Such home screen may be at least one of a screen of displaying an image which corresponds to a service, a screen of displaying a plurality of icons and a screen which displays a plurality of widgets.

For example, the home screen may be a home screen regarding a broadcast service, a home screen regarding a play service of an image received from an external apparatus, a home screen regarding an application providing service, a home screen regarding a social relation, a home screen regarding a VOD (Video On Demand) service, or a home screen regarding a content providing service.

When a home screen regarding a broadcast service is generated, the controller 130 may generate a home screen regarding a broadcast service having a particular layout by using broadcast data received through the image receiver 150 and a presentation module of a home screen regarding a broadcast service stored in the storage 170.

In addition, when a home screen regarding an application providing service is generated, the controller 130 may generate a home screen regarding an application providing service having a particular layout by using information on an application stored in the storage 170 and a presentation module of a home screen regarding the application providing service.

Further, the controller 130 may generate a plurality of display screens which display a first home screen from among the generated plurality of home screens and a portion of an area of at least one second home screen which is different from the first home screen.

Specifically, the controller 130 may generate a plurality of display screens by disposing the first home screen, from among the generated plurality of home screens, on the center of the display screen, and disposing a portion of an area of a home screen which is different from the first home screen on the left side and on the right side of the display screen.

When the power of the display apparatus 100 is turned on, the controller 130 may control the display 110 to display a display screen including a default home screen from among the generated plurality of display screens.

The default home screen may be a home screen which corresponds to a service which is performed just prior to the display apparatus being turned off. In addition, the default home screen may be at least one of a home screen regarding a broadcast service and a home screen regarding a play service, of an image received from an external apparatus.

In addition, when a predetermined first user manipulation is inputted, or when a predetermined period of time elapses after the power to the display apparatus is turned on, the controller 130 may control the display 110 to display a home screen disposed as a full screen on the center of the display screen. At this point, the predetermined first user manipulation, for example, may be a user manipulation of touching a home screen disposed on the center of a display screen or selecting a 'display full screen button' on a remote controller. Hence, the home screen disposed on the center of the currently displayed display screen may be displayed as a full screen.

Alternatively, when the predetermined period of time elapses after the power of the display apparatus is turned on, the controller 130 may control the display 110 to display a display screen which displays a default home screen as a full screen. Hence, regardless of the home screen disposed on the center of the currently displayed display screen, the default home screen may be displayed as a full screen.

In addition, when a predetermined second user manipulation is inputted through the input unit 120, the controller 130 may control the display 110 to change and display the display screen which displays the first home screen as a full screen to a display screen of displaying the first home screen and a portion of an area of a home screen which is different from the first home screen. At this point, the second user manipulation, for example, may be a user manipulation of selecting a 'display a plurality of home screens button' on the remote controller.

In addition, when a predetermined third user manipulation is inputted through the input unit 120, the controller 130 may control the display 110 to change the first home screen from a full screen to display a display screen which displays the second home screen and a portion of an area of a home screen which is different from the second home screen. The third user manipulation, for example, may be a user manipulation of selecting a 'direction button' on the remote controller. That is, when a 'left direction button' is selected while the first home screen is being displayed as a full screen, the controller 130 may control the display 110 to change the display of the first home screen as a full screen and display the display screen which displays the first home screen as a full screen on a display screen which displays the second home screen disposed on the left side of the first home screen and displays a home screen which is different from the second home screen.

In addition, when a predetermined fourth user manipulation is inputted through the input unit 120, the controller 130 may control the display 110 to change the display of a display screen of the first home screen and a portion of an area of at least one second home screen which is different from the first home screen to a display screen which displays the second home screen and a portion of an area of a home screen which is different from the second home screen. At this point, the fourth user manipulation, for example, may be a user manipulation of selecting a 'direction button' on the remote controller, or selecting a portion of an area of the second home screen which is disposed on the left side or the right side of the display screen.

In addition, when the display apparatus 100 is turned on, the controller 130 may control display 110 to display an intro image which sequentially displays a plurality of home screens, and display a display screen which is generated after the intro image is displayed.

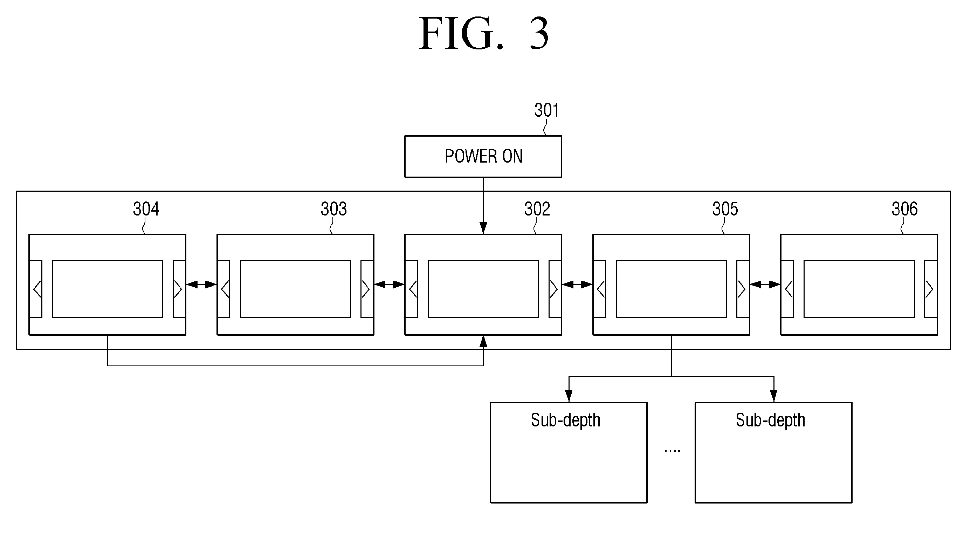

Hereinafter, operations of the exemplary embodiments will be explained in detail with reference to FIG. 3 to FIG. 9.

FIG. 3 to FIG. 7 are views which illustrate a plurality of display screens generated according to an exemplary embodiment. Hereinafter, for convenience in explanation, it is assumed that the plurality of home screens according to an exemplary embodiment include five home screens, a second home screen is a home screen disposed on a left side of a first home screen, a third home screen is a home screen disposed on a left side of the second home screen, a fourth home screen is a home screen disposed on the right side of the first home screen, and a fifth home screen is a home screen disposed on a right side of the fourth home screen and a left side of the third home screen. In addition, the first home screen may be a home screen regarding a broadcast service, the second home screen may be a home screen regarding an application providing service, the third home screen may be a home screen regarding a social relation, the fourth home screen may be a home screen regarding a

VOD (Video On Demand) service and the fifth home screen may be a home screen regarding a content providing service. However, the first through fifth home screens are not limited thereto.

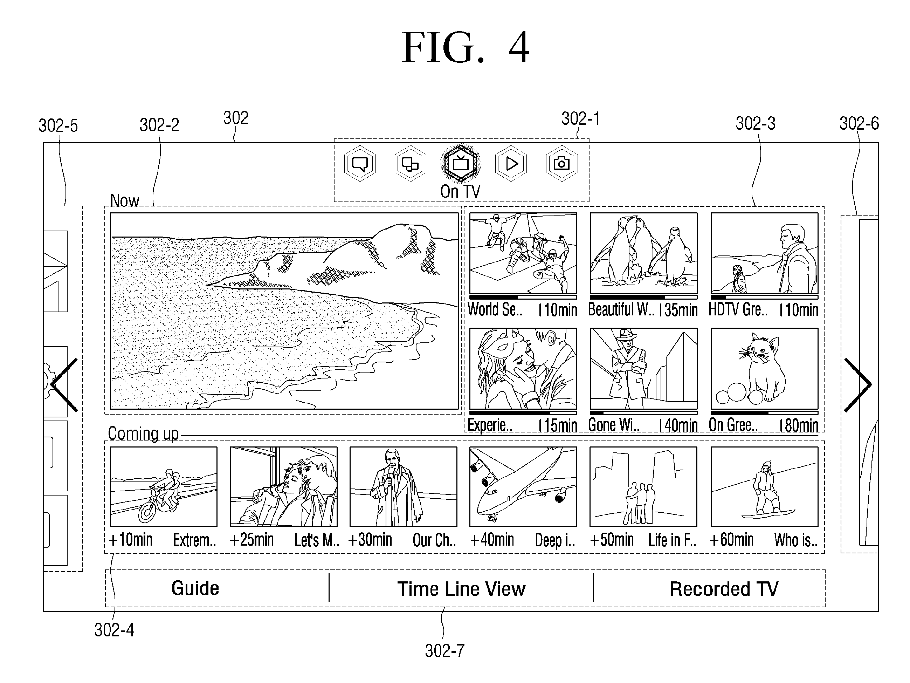

As shown in FIG. 4, a first display screen 302 includes the first home screen 302-1, 302-2, 302-3, 302-4, and 302-7, a portion of an area of the second home screen 302-5, and a portion of an area of the fourth home screen 302-6. At this point, the first home screen includes an area displaying a category (a home screen regarding a broadcast service (On TV)) of the first home screen 302-1, an area displaying a broadcast service on a channel selected right before the display apparatus 100 is turned off 302- 2, an area displaying a broadcast service on another channel 302-3, an area displaying further broadcast services 302-4, and an area displaying a sub-depth item (Guide, Time Line View, Recorded TV) of the first home screen 302-7.

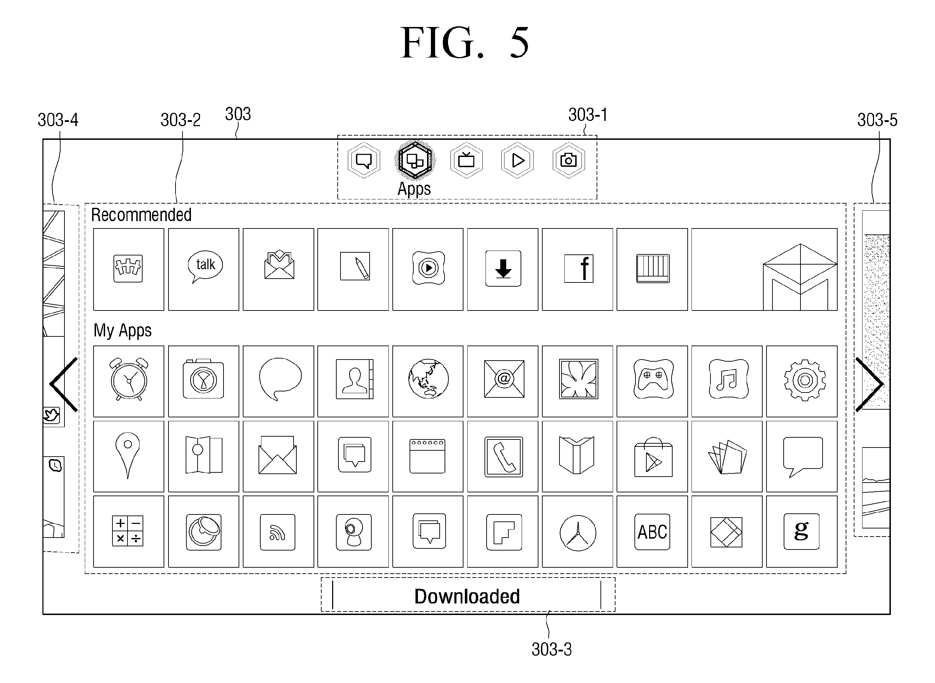

As shown in FIG. 5, a second display screen 303 includes the second home screen 303-1, 303-2, and 303-3, a portion of an area of the third home screen 303-4, and a portion of an area of the first home screen 303-5. At this point, the second home screen includes an area which displays a category (a home screen regarding an application providing service (Apps)) of the second home screen 303-1, an area displaying a recommended application and installed application 303-2, and an area displaying a sub-depth item (Downloaded) of the second home screen 303-3.

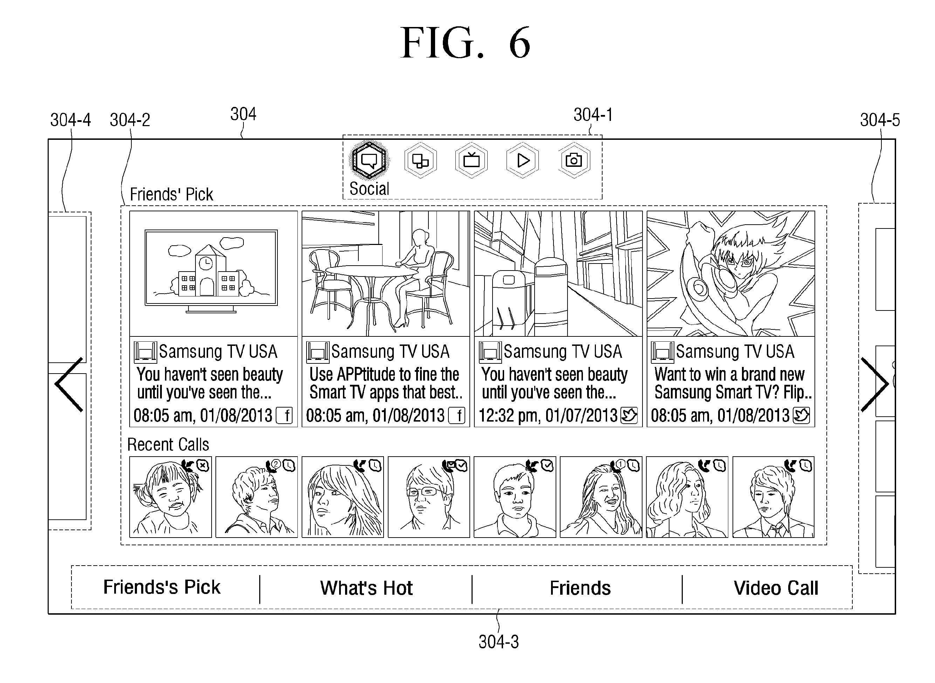

As shown in FIG. 6, a third display screen 304 includes the third home screen 304-1, 304-2, and 304-3, a portion of area of the fifth home screen 304-4, and a portion of area of the second home screen 304-5. At this point, the third home screen includes an area displaying a category (a home screen regarding a social relation (Social)) of the third home screen 304-1, a recent call list, an area displaying a social relation with other people like a picture of friends 304-2, and an area displaying a sub-depth item (Friends' Pick, What's hot, Friends, and Video Call) of the third home screen 304-3.

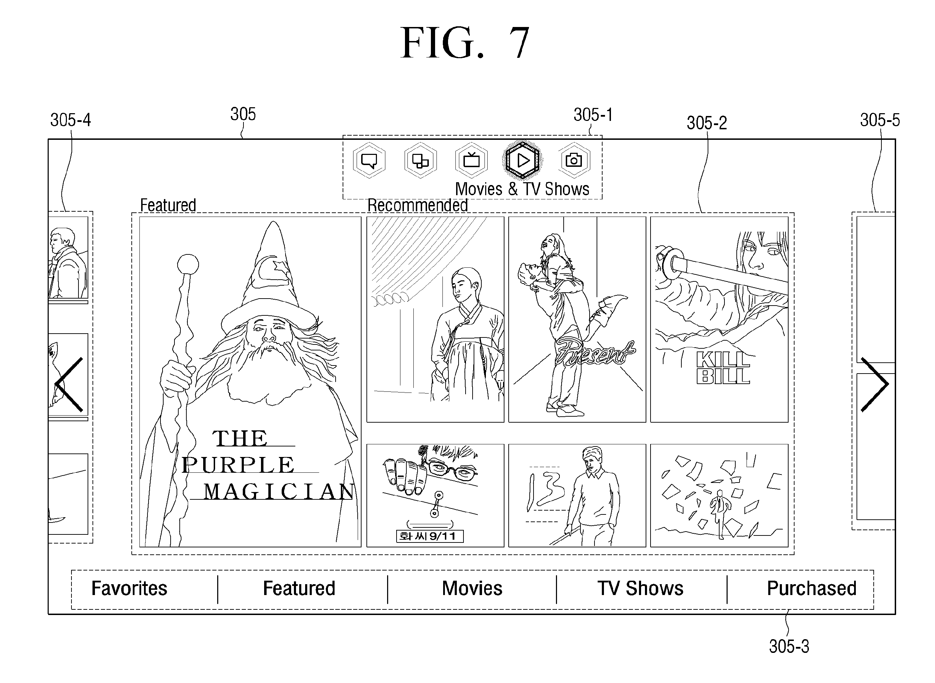

As shown in FIG. 7, a fourth display screen 305 includes the fourth home screen 305-1, 305-2, and 305-3, a portion of an area of the first home screen 305-4, and a portion of an area of the fifth home screen 305-5. At this point, the fourth home screen includes an area displaying a home screen (Movies & TV shows) relating to a category (VOD (Video On Demand) service of the fourth home screen 305-1, an area displaying the VOD service 305-2, and an area displaying a sub-depth item (Favorites, Featured, Movies, TV Shows, and Purchased items) 304-3.

That is, when the power of the display apparatus 100 is turned on (301), the controller 130 may generate a plurality of home screens which are providable on the display apparatus 100, and may generate display screens 302, 303, 304, 305, and 306 using the generated plurality of home screens. Specifically, the controller 130 may generate a plurality of display screens 302, 303, 304, 305, and 306 by disposing a home screen among the plurality of generated home screens on the center of the display screen, and disposing a portion of an area of another home screen on the left side of the display screen and a portion of an area of another home screen on the right side of the display screen.

In addition, in response to the power of the display apparatus 100 being turned on (301), the controller 130 may control the display 110 to display a display screen including a default home screen 302 from among the generated plurality of display screens. At this point, the default home screen may be a screen relating to a broadcast service which is performed just prior to the display apparatus 100 being turned off, as shown in FIG. 4.

While a screen as shown in FIG. 4 to FIG. 7 is displayed, when the predetermined fourth user manipulation is inputted through the input unit 120, display screens may be converted. For example, while the first display screen in FIG. 4 is displayed, when a user selects a 'left direction button' on the remote controller, or selects an area displaying a portion of an area of the second home screen of a display screen 302-5, or selects "Apps" of 302-2, the second display screen in FIG. 5 may be displayed. Alternatively, while the third display screen in FIG. 6 is displayed, when the user selects a 'default home button' on the remote controller, or selects "ON TV" of 304-1, the first display screen in FIG. 4 may be displayed.

The controller 130 may control the display 110 to change and display a display screen from displaying the first home screen and a portion of an area of at least one second home screen which is different from the first home screen to a display screen which displays the second home screen and a portion of an area of a home screen different from the second home screen. At this point, the fourth user manipulation, for example, may be a user manipulation of selecting a 'direction button' on the remote controller, or selecting a portion of the second home screen disposed on the left side or the right side of the display screen.

Although five home screens are shown in FIG. 3 to FIG. 7, the number of the home screens is not limited to thereto. In addition, the services providable on the display apparatus 100 are not limited to the aforementioned examples, and may vary according to an implementation example.

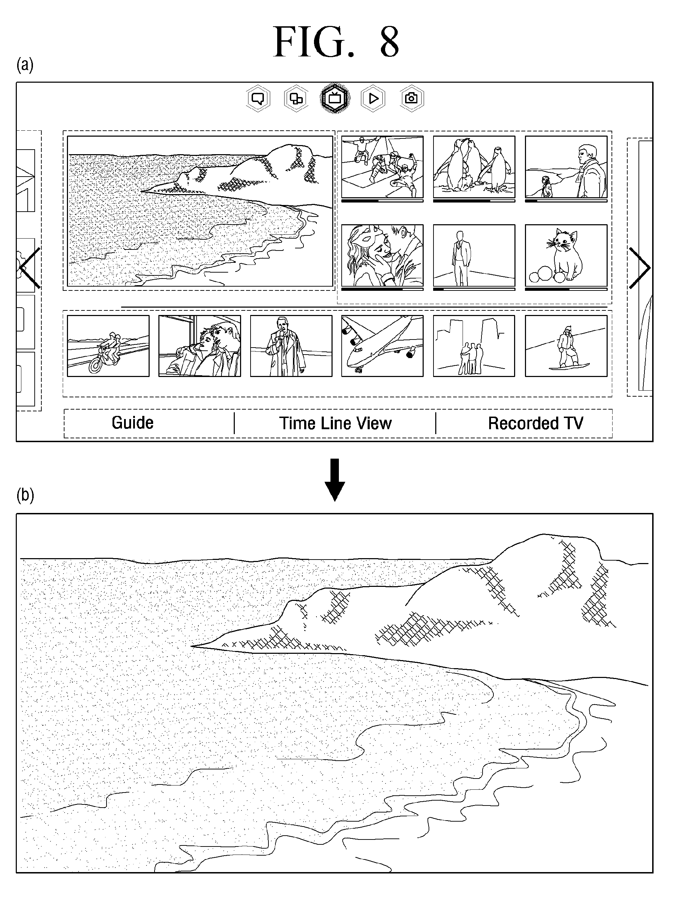

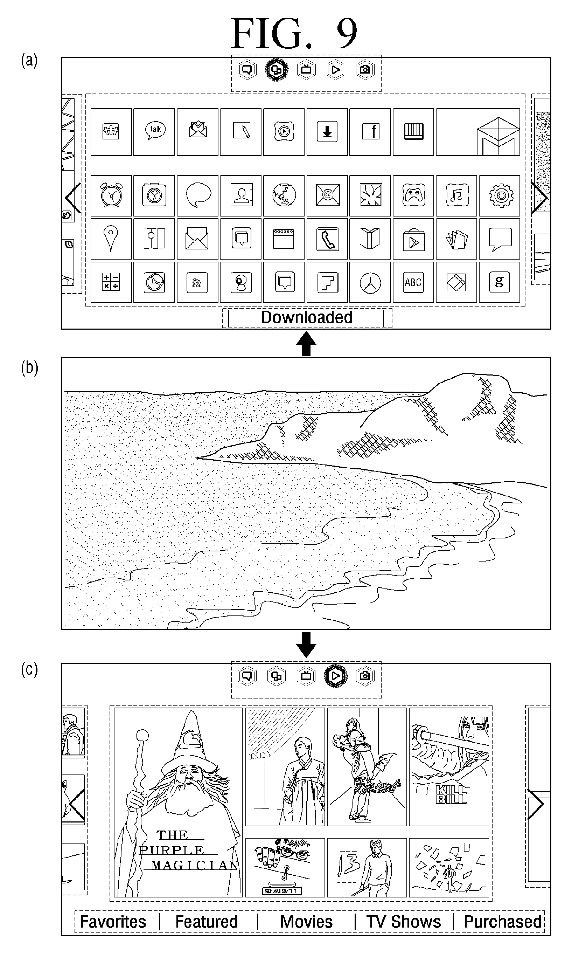

FIG. 8 and FIG. 9 are the views which illustrate the operation of the display apparatus according to an exemplary embodiment.

Referring to FIG. 8, as shown in view (a), while the first display screen 302 including the first home screen 302-1, 302-2, 302-3, 302-4, and 302-7, a portion of an area of the second home screen 302-5, and a portion of an area of the fourth home screen 302-6 is displayed, when a predetermined period of time has elapsed after the power of the display apparatus 100 is turned on, a display screen which displays the first home screen 302-1, 302-2, 302-3, 302-4, and 302-7 as a full screen may be displayed. Alternatively, as shown in view (b), a display screen which displays an area displaying a broadcast service on a channel selected as a full screen may be displayed just prior to the display apparatus 100 being turned off 302-2.

However, the aforementioned example is merely an exemplary embodiment, and when the first user manipulation is inputted on a display screen as shown in view (a), a display screen which displays the first home screen as a full screen may be displayed. At this point, the predetermined first user manipulation, for example, may be a user manipulation of touching the first home screen disposed on the center of the display screen, or selecting a 'display full screen button' on the remote controller.

When the predetermined period of time elapses after the power of the display apparatus 100 is turned on, the controller 130 may control the display 110 to display a default home screen as a full screen. Hence, regardless of the home screen disposed on the center of the currently displayed display screen, the default home screen may be displayed as a full screen.

Referring to FIG. 9, as shown in view (a), while a display screen which displays a full screen is displayed, when the predetermined third user manipulation is inputted through the input unit 120, a display screen including a plurality of home screens may be displayed as shown in view (b) and view (c). For example, while a display screen which displays the first home screen as a full screen is displayed, a display screen displays the second home screen and a portion of an area of the third home screen, when a 'left direction button' on the remote controller is selected" and a portion of an area of the first home screen may be displayed.

According to the aforementioned various exemplary embodiments, when the power to the display apparatus is turned on, a display screen including a default home screen from among a plurality of home screens and a portion of an area of a home screen different from the default home screen is displayed, and thus a user is able to easily understand various services of the display apparatus as soon as the power to the display apparatus is turned on.

In addition, according to various exemplary embodiments, when the power of the display apparatus is turned on, an intro image displaying a plurality of home screens is sequentially displayed, and thus a user is able to easily recognize various services of the display apparatus as soon as the power to the display apparatus is turned on.

In addition, according to various exemplary embodiments, while a service is provided on the display apparatus, a user is able to access to another service through a simple input manipulation.

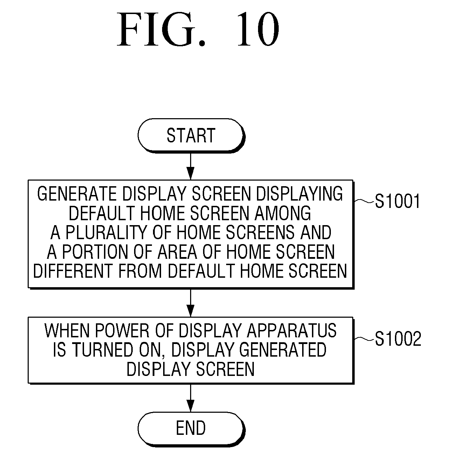

FIG. 10 is a flow chart which illustrates a method of controlling a display apparatus according to an exemplary embodiment. Referring to FIG. 10, a display screen displaying a default home screen from among a plurality of home screens and a portion of an area of a home screen different from the default home screen is generated. (S1001)

In addition, when the power of the display apparatus is turned on, the generated display screen is displayed. (S1002)

Herein, the default home screen may be a screen which corresponds to a service which is performed just prior to the display apparatus being turned off. In addition, the service may be at least one of a broadcast service and a play service of an image received from an external apparatus.

In addition, the generating (S1001) may include generating a display screen by disposing the default home screen on the center of the display screen, and disposing a portion of an area of a home screen different from the default home screen on the left side of the display screen and a portion of an area of a home screen different from the default home screen on the right side of the display screen.

In addition, the displaying (S1002) may include displaying an intro image which sequentially displays a plurality of home screens, and displays a display screen generated after the intro image is displayed.

A method of controlling a display apparatus according to an exemplary embodiment may further include displaying a display screen which only displays a default home screen, when a predetermined period of time has elapsed after the power to the display apparatus is turned on,.

In addition, the method according to an exemplary embodiment may further include receiving a predetermined user manipulation, and changing and displaying the display screen which only displays the default home screen to a display screen which displays the default home screen and a portion of an area of a home screen different from the default home screen when the predetermined user manipulation is inputted.

In addition, the method may further include receiving a user manipulation for receiving a selection of a different home screen, and generating and displaying a display screen based on the selected different home screen.

The home screen may include at least one of a screen displaying an image which corresponds to a service, a screen displaying a plurality of icons, and a screen displaying a plurality of widgets.

The method of controlling a display apparatus according to the aforementioned various exemplary embodiments may be implemented as a program code, and may be provided for each apparatus by being stored in various non-transitory computer readable storage mediums.

The non-transitory computer readable storage medium is not a medium that stores data for a short period of time, such as a register, a cache, or a memory, but refers to a medium which semi-permanently stores data and is readable by a device. To be specific, various applications and programs as described above may be stored as a data structure and provided in the non-transitory computer readable storage medium, such as a compact disc (CD), a digital versatile disk (DVD), a hard disk, a Blu-ray disk, a universal serial bus (USB), a memory card, and a read-only memory (ROM), or the like.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A method of controlling a display apparatus, comprising:
generating a display screen based on a default home screen among a plurality of home screens when power to the display apparatus is turned on; and
displaying the generated display screen,
wherein the generating comprises:
generating a display screen displaying the default home screen among the plurality of home screens and a portion of an area of a home screen different from the default home screen.

2. The method as claimed in claim 1, wherein the default home screen is a screen corresponding to a service which is performed right before the display apparatus is turned off.

3. The method as claimed in claim 2, wherein the service is at least one of a broadcast service and a play service of an image received from an external apparatus.

4. The method as claimed in claim 1, wherein the generating comprises:
generating a display screen by disposing the default home screen on a center of a display screen, and disposing a portion of an area of a home screen different from the default home screen on a left side and a right side of the display screen.

5. The method as claimed in claim 1, further comprising:
displaying a display screen displaying only the default home screen when a predetermined time elapses after power to the display apparatus is turned on.

6. The method as claimed in claim 5, further comprising:
receiving a predetermined user manipulation; and
when the predetermined user manipulation is inputted, changing and displaying the display screen displaying only the default home screen to a display screen displaying the default home screen and a portion of an area of a home screen different from the default home screen.

7. The method as claimed in claim 1, wherein the displaying comprises:
when the display apparatus is turned on, displaying an intro image displaying the plurality of home screens sequentially, and displaying a display screen generated after the intro image is displayed.

8. The method as claimed in claim 1, further comprising:
receiving a user manipulation for receiving a selection of the different home screen; and
generating and displaying a display screen based on the selected different home screen.

9. The method as claimed in claim 1, wherein the home screen is at least one of a screen displaying an image corresponding to a service, a screen displaying a plurality of icons, and a screen displaying a plurality of widgets.

10. A display apparatus, comprising:
a display configured to display a screen; and
a controller configured to, when the power of the display apparatus is turned on, control the display to generate a display screen based on a default home screen among a plurality of home screens, and display the generated display screen,
wherein the controller generates a display screen displaying the default home screen among the plurality of home screens and a portion of an area of the home screen different from the default home screen.

11. The apparatus as claimed in claim 10, wherein the default home screen is a screen corresponding to a service which is performed right before the display apparatus is turned off.

12. The apparatus as claimed in claim 11, wherein the service is at least one of a broadcast service and a play service of an image received from an external apparatus.

13. The apparatus as claimed in claim 10, wherein the controller generates a display screen by disposing the default home screen on the center of the display screen, and disposing a portion of an area of a home screen different from the default home screen on the left side and the right side of the display screen.

14. The apparatus as claimed in claim 10, wherein when a predetermined time elapses after a power of the display apparatus is turned on, the controller controls the display to display a display screen displaying only the default home screen.

15. A computer-readable recording medium in which a program code for executing a method of claim 1.
